# EUROPEAN PATENT SPECIFICATION

(11) **EP 2 781 433 B1**
(45) Date of publication and mention of the grant of the patent: **10.05.2017**
(21) Application number: 13167528.2
(22) Date of filing: 13.05.2013
(51) Int. Cl.: B62B 7/14

(54) **Electronic seat reversing structure of baby stroller**
Elektronische Sitzumkehrstruktur für einen Kinderwagen
Structure électronique de retournement de siège de poussette d'enfant

(30) Priority: 22.03.2013 CN 201320135587 U
(43) Date of publication of application: 24.09.2014
(73) Proprietor: O'SK Baby & Children Products (Fujian) Co., Ltd., Zhang Zhou City, Fujian (CN)
(72) Inventor: Yao, Fulai, Zhang Zhou City Fujian Province, (CN); Lei, Dexiang, Zhang Zhou City Fujian Province, (CN); Huang, Jinhai, Zhang Zhou City Fujian Province, (CN)
(74) Representative: Hellmich, Wolfgang

(56) References cited:
- EP-A2- 1 764 281
- US-A1- 2008 224 508
- US-A1- 2011 193 325

## Description

The invention relates to an electric seat reversing structure of a baby stroller, which may be used in a baby stroller. A baby stroller according to the preamble part of claim 1 is disclosed in US 2011/193325 A1.

US 2011/193325 A1 discloses a stroller frame with a swivel seat. The front leg and the rear leg each has an upper end pivoted to the pivotally support base. The pivotally support base is formed with an axle hole and a pair of locking positions. The pair of locking positions may be embodied as two recesses or indents which spaced 180° apart from each other. A locking member is associated with the push bar and operatively installed on the stroller for locking the swivel seat in either the forward facing direction or rearward facing direction.

In the prior art, the seat reversing structures of general baby strollers are detachable. When a mother wants to communicate with her baby, she can dismount the seat and then mount it on the frame again in another direction, in this way, the baby can face the mother. In the above seat reversing procedure, it is needed to dismount the seat and mount it to the frame again, which seems inconvenient when the operator holds something in hands. Therefore, it is expected to have a baby stroller, realizing seat reversing without dismounting the seat.

The technical problem which needs to be solved by the invention is to provide an electric seat reversing structure of a baby stroller, realizing seat reversing without dismounting the seat.

The following technical solution is adopted in the invention.

An electric seat reversing structure of a baby stroller comprises a supporting pedestal arranged on a frame of a baby stroller and an upper supporting stand, the upper supporting stand is rotatably connected with the supporting pedestal through a rotating shaft driven by a motor, and an input end of the motor is connected with an output end of a control circuit.

The following improvement measures may be further employed in the invention for solving the technical problem.

The rotating shaft is connected with a shaft of the motor.

A transmission mechanism is provided between the motor and the rotating shaft, and the motor is meshed with the rotating shaft through the transmission mechanism for transmission.

The transmission mechanism comprises a driving gear and a driven gear, the rotating shaft is connected with the driven gear, the shaft of the motor is connected with the driving gear, and the driving gear is meshed with the driven gear.

The control circuit is a circuit capable of controlling the rotating angle of the motor.

The electric seat reversing structure of a baby stroller comprises a reversing button which is electrically connected with the control circuit.

The electric seat reversing structure of a baby stroller comprises a remote control which is capable of accomplishing wireless communication with the control circuit, the remote control sending signals to the control circuit, and the control circuit controlling the motor to rotate or stop rotating after receiving the signals.

A reversing button for rotating the seat to corresponding angles is arranged on the remote control.

The reversing button is arranged on a handlebar or frame or rear wheel bracket of the baby stroller.

The control circuit is arranged on a Printed Circuit Board (PCB) which is mounted inside the supporting pedestal.

The above technical solution achieves the technical effects as follows.
1. The electric seat reversing structure of the baby stroller of the invention has few components and simple structure, and is convenient for manufacturing.
2. By adopting the electric seat reversing structure of the baby stroller of the invention, a user can easily reverse the seat through the reversing button. Compared with the prior art, the invention is advantageous in that the user may interact or communicate with the baby conveniently without dismounting the seat.
   Fig. 1 is an application diagram of the electric seat reversing structure of the baby stroller of the invention;
   Fig. 2 is an exploded structure diagram between a frame and the electric seat reversing structure of the baby stroller of the invention;
   Fig. 3 is an exploded diagram of components of the electric seat reversing structure of the baby stroller of the invention;
   Fig. 4 is a sectional view of the electric seat reversing structure of the baby stroller of the invention; and
   Fig. 5 is an internal structure diagram of the electric seat reversing structure of the baby stroller of the invention.

The invention will be further described in details as below by specific embodiments.

### Embodiment

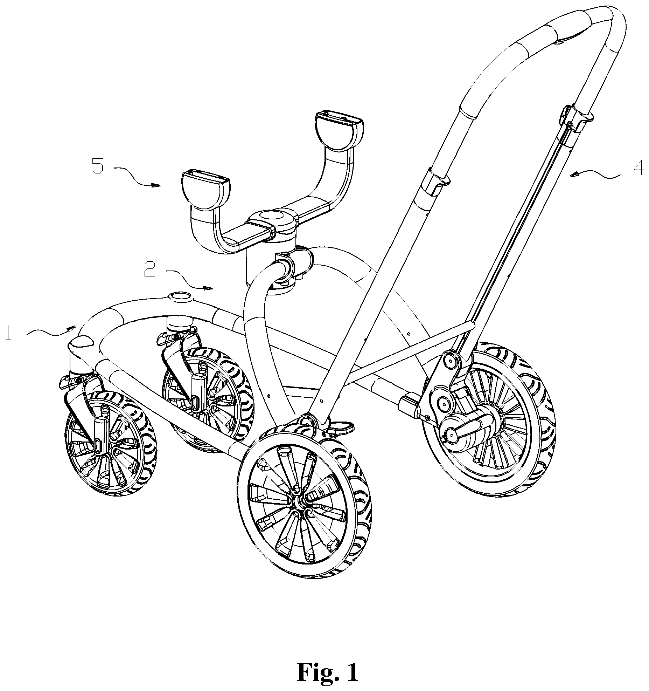

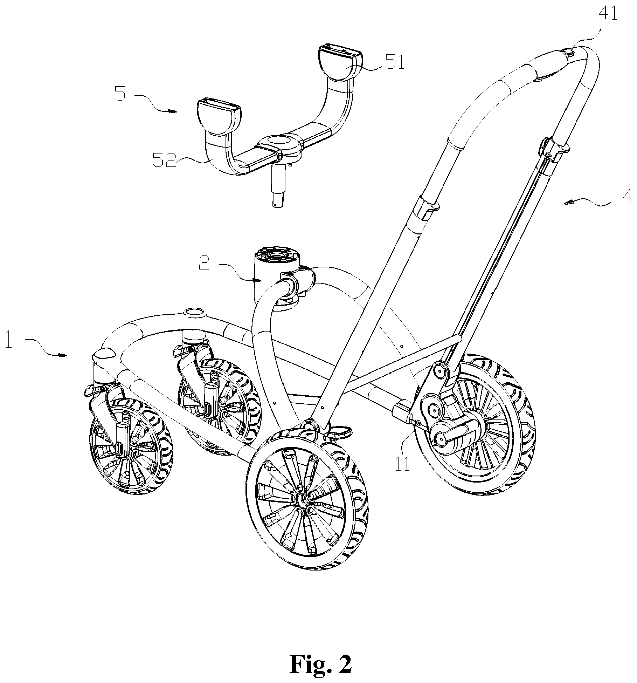

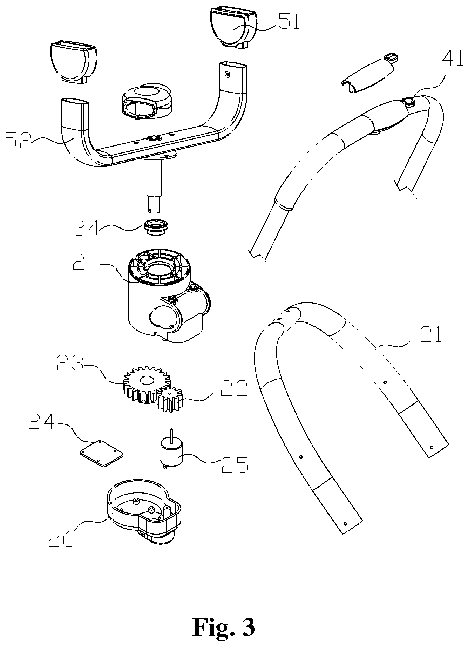

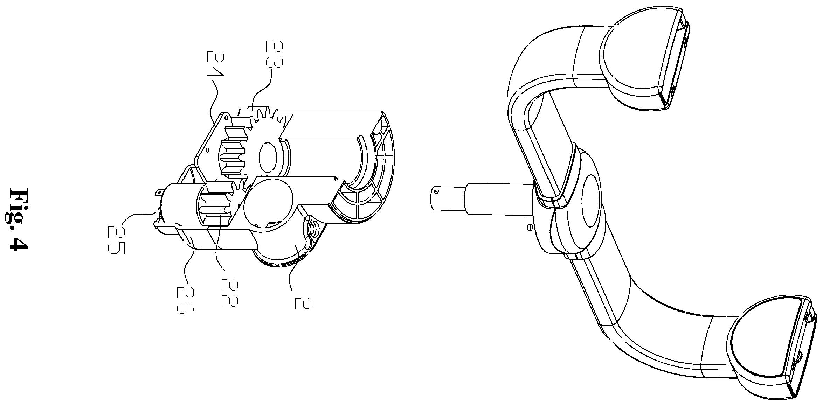

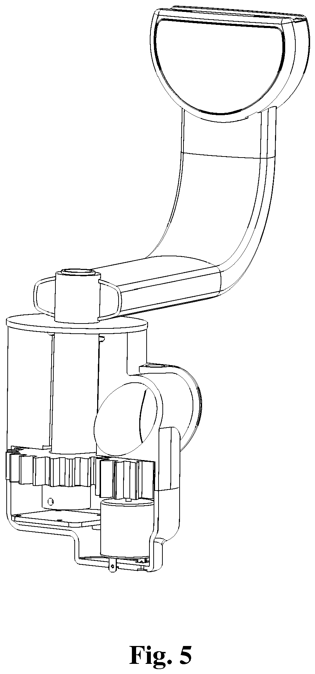

As shown from Fig. 1 to Fig. 5, an electric seat reversing structure of a baby stroller comprises a supporting pedestal 2 arranged on a frame 1 of a baby stroller and an upper supporting stand 5. In the embodiment, the supporting pedestal is mounted on an intermediate supporting tube 21 in the frame, The upper supporting stand 5 is rotatably connected with the supporting pedestal 2 through a rotating shaft, the rotating shaft is mounted in the supporting pedestal through a bearing 34 and driven by a motor 25, and an input end of the motor 25 is connected with an output end of a control circuit. A fixed cover 26 is arranged on the bottom of the supporting pedestal. The upper supporting stand 5 comprises connecting bases 51 and an upper supporting tube 52. The supporting stand is used for connecting a seat or a bassinet.

A transmission mechanism is provided between the motor 25 and the rotating shaft, and the motor 25 is meshed with the rotating shaft through the transmission mechanism for transmission. The transmission mechanism comprises a driving gear 22 and a driven gear 23, the rotating shaft is connected with the driven gear 23, the shaft of the motor is connected with the driving gear 22, and the driving gear 22 is meshed with the driven gear 23.

A control circuit is arranged on a Printed Circuit Board (PCB) 24 which is mounted in the supporting pedestal 2. The control circuit is a circuit capable of controlling the rotating angle of the motor. The electric seat reversing structure of a baby stroller comprises a reversing button 41 which is electrically connected with the control circuit by wires. The reversing button 41 is arranged on a handlebar 4 or the frame or a rear wheel bracket 11 of the baby stroller, and is convenient for operation. It is convenient for operating by hands by arranging the reversing button on the handlebar, and is convenient for operating by feet by arranging the reversing button on the rear wheel bracket. The rotating angle of the motor 25 is controlled by programs set by the control circuit.

Of course, the rotating shaft may also be connected with the shaft of the motor, thereby omitting the transmission mechanism.

### Another embodiment

This embodiment is characterized by comprising a remote control capable of accomplishing wireless communication with the control circuit, the remote control sending signals to the control circuit, and the control circuit controlling the motor to rotate or stop rotating after receiving the signals. A reversing button for rotating the seat to corresponding angles is arranged on the remote control.

## Claims

1. An electric seat reversing structure of a baby stroller, comprising a supporting pedestal (2) arranged on a frame (1) of a baby stroller and an upper supporting stand (5), the upper supporting stand (5) is rotatably connected with the supporting pedestal (2)
**characterized in that**
the upper supporting stand (5) is rotatably connected with the supporting pedestal (2) through a rotating shaft driven by a motor (25), and an input end of the motor (25) is connected with an output end of a control circuit.

2. The electric seat reversing structure of a baby stroller according to claim 1, wherein the rotating shaft is connected with a shaft of the motor (25).

3. The electric seat reversing structure of a baby stroller according to claims 1 or 2, wherein a transmission mechanism is provided between the motor (25) and the rotating shaft, and the motor (25) is meshed with the rotating shaft through the transmission mechanism for transmission.

4. The electric seat reversing structure of a baby stroller according to claim 3, wherein the transmission mechanism comprises a driving gear (22) and a driven gear (23), the rotating shaft is connected with the driven gear (23), the shaft of the motor (25) is connected with the driving gear (22), and the driving gear (22) is meshed with the driven gear (23).

5. The electric seat reversing structure of a baby stroller according to claim 4, wherein the control circuit is a circuit capable of controlling the rotating angle of the motor.

6. The electric seat reversing structure of a baby stroller according to one of claims 1 to 5, comprising a reversing button (41) which is electrically connected with the control circuit.

7. The electric seat reversing structure of a baby stroller according to one of claims 1 to 6, comprising a remote control which is capable of accomplishing wireless communication with the control circuit, the remote control sending signals to the control circuit, and the control circuit controlling the motor to rotate or stop rotating after receiving the signals.

8. The electric seat reversing structure of a baby stroller according to claim 7, wherein a reversing button for rotating the seat to corresponding angles is arranged on the remote control.

9. The electric seat reversing structure of a baby stroller according to claim 6 or claim 7 or 8 as far as claim 7 and 8 refer to claim 6, wherein the reversing button (41) is arranged on a handle bar (4) or frame (1) or rear wheel bracket (11) of the baby stroller.

10. The electric seat reversing structure of a baby stroller according to one of claims 1 to 9, wherein the control circuit is arranged on a Printed Circuit Board (PCB) (24) which is mounted inside the supporting pedestal (2).

## Patentansprüche

1. Eine elektrische Sitzumkehrstruktur für einen Kinderwagen mit einem tragenden Lagerbock (2), der auf einem Rahmen (1) eines Kinderwagens angeordnet ist, und einem oberen tragenden Gestell (5), wobei das obere tragende Gestell (5) drehbar mit dem tragenden Lagerbock (2) verbunden ist **dadurch gekennzeichnet, dass**
das obere tragende Gestell (5) drehbar mit dem tragenden Lagerbereich (2) mittels einer rotierenden Achse, die durch einen Motor (25) angetrieben wird, verbunden ist und ein Eingangsende des Motors (25) mit einem Ausgangsende einer Steuerschaltung verbunden ist.

2. Die elektrische Sitzumkehrstruktur für einen Kinderwagen gemäß Anspruch 1, wobei die rotierende Achse mit einer Achse des Motors (25) verbunden ist.

3. Die elektrische Sitzumkehrstruktur für einen Kinderwagen gemäß Ansprüchen 1 oder 2, wobei ein Transmissionsmechanismus zwischen dem Motor (25) und der rotierenden Achse vorgesehen ist, und der Motor (25) zur Übertragung mit der rotierenden Achse durch den Transmissionsmechanismus im Eingriff steht.

4. Die elektrische Sitzumkehrstruktur für einen Kinderwagen gemäß Anspruch 3, wobei der Transmissionsmechanismus ein Antriebszahnrad (22) und ein Abtriebszahnrad umfasst, wobei die rotierende Achse mit dem Abtriebszahnrad (23) verbunden ist, wobei die Achse des Motors (25) mit dem Antriebszahnrad (22) verbunden ist und das Antriebszahnrad (22) in das Abtriebszahnrad (23) eingreift.

5. Die elektrische Sitzumkehrstruktur für einen Kinderwagen gemäß Anspruch 4, wobei die Steuerschaltung eine Schaltung ist, die imstande ist, den Rotationswinkel des Motors zu steuern.

6. Die elektrische Sitzumkehrstruktur für einen Kinderwagen gemäß einem der Ansprüche 1 bis 5, die einen Umkehrknopf (41) umfasst, der elektrisch mit der Steuerschaltung verbunden ist.

7. Die elektrische Sitzumkehrstruktur für einen Kinderwagen gemäß einem der Ansprüche 1 bis 6, die eine Fernbedienung umfasst, die zur drahtlosen Kommunikation mit der Steuerschaltung imstande ist, wobei die Fernbedienung Signale zur Steuerschaltung sendet und die Steuerschaltung den Motor steuert, um nach Empfangen der Signale zu rotieren oder aufzuhören zu rotieren.

8. Die elektrische Sitzumkehrstruktur für einen Kinderwagen gemäß Anspruch 7, wobei sich ein Umkehrknopf zum Drehen des Sitzes in die entsprechenden Winkel auf der Fernbedienung befindet.

9. Die elektrische Sitzumkehrstruktur für einen Kinderwagen gemäß einem der Ansprüche 6, 7 oder 8, soweit sich Anspruch 7 und Anspruch 8 auf Anspruch 6 beziehen, wobei sich der Umkehrknopf (41) auf einer Lenkstange (4) oder auf dem Rahmen (1) oder der Hinterradklammer (11) des Kinderwagens befindet.

10. Die elektrische Sitzumkehrstruktur für einen Kinderwagen gemäß einem der Ansprüche 1 bis 9, wobei sich die Steuerschaltung auf einer Platine (PCB) (24) befindet, die innerhalb des tragenden Lagerbocks (2) eingebaut ist.

## Revendications

1. Structure électrique de retournement de siège de poussette d'enfant, comprenant un socle de support (2) agencé sur un cadre (1) d'une poussette d'enfant et une sellette de support supérieur (5), la sellette de support supérieur (5) étant reliée de façon pivotante au socle de support (2) ;
**caractérisée en ce que** :
la sellette de support supérieur (5) est reliée de façon pivotante au socle de support (2) à travers un arbre pivotant entraîné par un moteur (25) et une extrémité d'entrée du moteur (25) est reliée à une extrémité de sortie d'un circuit de commande.

2. Structure électrique de retournement de siège de poussette d'enfant selon la revendication 1, dans laquelle l'arbre pivotant est relié à un arbre du moteur (25).

3. Structure électrique de retournement de siège de poussette d'enfant selon la revendications 1 ou 2, dans laquelle un mécanisme de transmission est prévu entre le moteur (25) et l'arbre pivotant et le moteur (25) est engrené avec l'arbre pivotant à travers le mécanisme de transmission pour réaliser la transmission.

4. Structure électrique de retournement de siège de poussette d'enfant selon la revendication 3, dans laquelle le mécanisme de transmission comprend un engrenage moteur (22) et un engrenage entraîné (23), l'arbre pivotant est relié à l'engrenage entraîné (23), l'arbre du moteur (25) est relié à l'engrenage moteur (22) et l'engrenage moteur (22) est engrené avec l'engrenage entraîné (23).

5. Structure électrique de retournement de siège de poussette d'enfant selon la revendication 4, dans laquelle le circuit de commande est un circuit capable de commander l'angle de rotation du moteur.

6. Structure électrique de retournement de siège de poussette d'enfant selon l'une quelconque des revendications 1 à 5, comprenant un bouton de retournement (41) relié électriquement au circuit de commande.

7. Structure électrique de retournement de siège de poussette d'enfant selon l'une quelconque des revendications 1 à 6, comprenant une télécommande capable d'accomplir une communication sans fil avec le circuit de commande, la télécommande envoyant des signaux au circuit de commande et le circuit de commande commandant au moteur de tourner ou d'arrêter de tourner après réception des signaux.

8. Structure électrique de retournement de siège de poussette d'enfant selon la revendication 7, dans laquelle un bouton de retournement servant à faire pivoter le siège selon des angles correspondants est agencé sur la télécommande.

9. Structure électrique de retournement de siège de poussette d'enfant selon la revendication 6 ou les revendications 7 ou 8 dans la mesure où ces revendications 7 et 8 se réfèrent à la revendication 6, dans laquelle le bouton de retournement (41) est agencé sur une barre de poignée (4) ou sur le cadre (1) ou une ferrure de roue arrière (11) de la poussette d'enfant.

10. Structure électrique de retournement de siège de poussette d'enfant selon l'une quelconque des revendications 1 à 9, dans laquelle le circuit de commande est agencé sur une carte de circuit imprimé (PCB) (24) fixée à l'intérieur du socle de support (2).
